# FASCICULE DE BREVET EUROPEEN

(11) **EP 3 692 252 B1**
(45) Date de publication et mention de la délivrance du brevet: **24.04.2024**
(21) Numéro de dépôt: 18773495.9
(22) Date de dépôt: 01.10.2018
(51) Int. Cl.: F02M 63/00, F02M 61/18

(54) **VALVE**
VENTIL
VALVE

(30) Priorité: 02.10.2017 FR 1759204
(43) Date de publication de la demande: 12.08.2020
(73) Titulaire: Delphi Technologies IP Limited, St. Michael (BB)
(72) Inventeur: ENTERS, Richard, 41350 Vineuil (FR)
(74) Mandataire: Office Freylinger
(86) Numéro de dépôt international: PCT/EP2018/076683
(87) Numéro de publication internationale: WO 2019/068657

(56) Documents cités:
- WO-A1-2012/059265
- WO-A1-2014/000959
- DE-A1- 10 255 328
- DE-A1-102010 002 637
- DE-A1-102010 040 940
- DE-A1-102011 089 360
- US-A1- 2003 098 074
- US-A1- 2011 180 635
- US-A1- 2014 190 578

## Description

### DOMAINE TECHNIQUE

La présente invention se rapporte à une valve comprenant un corps de valve et un clapet.

### ARRIERE-PLAN TECHNOLOGIQUE DE L' INVENTION

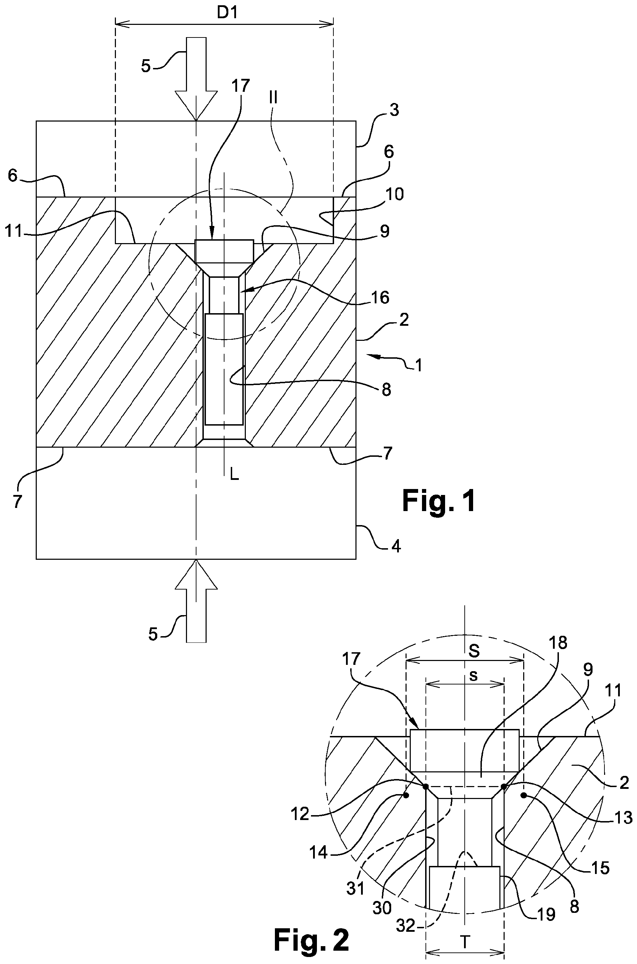

La figure 1 représente une valve selon l'art antérieur. La valve 1 est agencée entre une pièce 3 et une pièce 4, mobiles l'une par rapport à l'autre, comme représenté par les flèches 5.

La valve 1 comprend un corps de valve 2 en matériau élastiquement déformable, par exemple en acier. La première pièce 3 est en contact avec le corps de valve 2 au niveau d'une surface de contact 6 du corps de valve. La deuxième pièce 4 est également en contact avec le corps de valve 2 au niveau d'une surface de contact 7 du corps de valve. Les surfaces de contact 6 et 7 sont disposées respectivement sur des faces opposées du corps de valve 2. Lors de leur déplacement relatif, les pièces 3 et 4 peuvent exercer une pression sur le corps de valve respectivement au niveau des surfaces de contact 6 et 7. Du côté de la surface de contact 6, le corps de valve 2 présente un évidement 10 comme décrit dans les documents DE10 2010002637 A1, US2014 190578 A1 et US2003/098074 A1.

Un canal 8 est ménagé dans le corps de valve. Le canal 8 présente un orifice d'extrémité débouchant dans l'évidement 10 et un orifice d'extrémité débouchant au niveau de la surface de contact 7. Le canal est sensiblement rectiligne et s'étend selon une direction longitudinale L. Au niveau de l'orifice d'extrémité débouchant dans l'évidement 10, le canal 8 présente une section s'élargissant progressivement pour définir une surface tronconique. La surface tronconique forme un siège de clapet 9. Entre la surface de contact 6 et le siège de clapet 9, s'étend une surface intermédiaire 11.

Selon les figures 1 et 2, la valve 1 est une valve équilibrée qui comprend également un clapet 16. Le clapet 16 comprend une tête 17 qui présente une portion tronconique 18. Le clapet 16 comprend également une tige 19 qui s'étend dans le canal 8 dans la direction de l'axe longitudinal L. La tige 19 présente une portion de section réduite qui définit, dans le canal 8, une chambre intérieure 30. La chambre intérieure 30 est délimitée par une section 31 définie par une ligne de contact entre la portion tronconique 18 et le siège de clapet 9, et une section 32 définie par un épaulement qui limite la portion de section réduite de la tige 19. Un conduit (non représenté) ménagé dans le corps 2 débouche dans la chambre intérieure 30.

Le clapet 16 est mobile entre une position d'obturation représentée sur la figure 1, dans laquelle la portion tronconique 18 coopère avec le siège de clapet 9 pour empêcher un écoulement entre la chambre intérieure 30 et l'évidemment 10, et une position d'ouverture, dans laquelle le clapet 16 autorise un écoulement entre la chambre intérieure 30 et l'évidemment 10. Un ressort, non représenté, sollicite le clapet 16 vers sa position d'obturation.

Le clapet 16 est soumis à différentes forces. Notamment, le clapet 16 est soumis à la force exercée par le fluide présent dans la chambre intérieure 30 sur les sections 31 et 32. Si les sections 31 et 32 ont la même surface, ces deux forces s'équilibrent au jeu près entre le corps et la tige. Ainsi, dans le cas où les autres forces exercées sur le clapet 10, notamment par le ressort, s'équilibrent entre elles, le clapet 16 est à l'équilibre, c'est-à-dire que le clapet est en position fermée grâce à l'action du ressort. Au contraire, si les sections 31 et 32 n'ont pas la même surface, ces deux forces ne s'équilibrent pas et le clapet 16 n'est pas à l'équilibre.

La figure 2 représente un détail de la figure 1 au niveau de la tête de clapet 17. La portion tronconique 18 est en contact avec le siège de clapet 9 au niveau d'une ligne de contact qui entoure la section 31. Sur la vue en coupe de la figure 2, cette ligne de contact est représentée par un point 12 et un point 13. Les figures 1 et 2 représentent le corps de valve 2 quand les pièces 3 et 4 (non représentées) n'exercent pas de pression substantielle sur les surfaces de contact 6 et 7 (non représentées). Dans ce cas, la ligne de contact est sensiblement circulaire et présente un diamètre s, et le canal 8 présente, au niveau de la section 32, un diamètre T égal au diamètre s. Les sections 31 et 32 présentent donc la même surface et le clapet 16 est à l'équilibre.

Selon les figures 1 et 2, quand les pièces 3 et 4 se déplacent de manière à exercer une pression substantielle sur les surfaces de contact 6 et 7, un champ de contrainte est créé dans le corps de valve 2. Ce champ de contrainte correspond à un champ de déformation du corps de valve 2. En raison de ce champ de déformation, la ligne de contact entre la portion tronconique 18 et le siège de clapet 9 est modifiée. Sur la vue en coupe de la figure 2, cette ligne de contact est représentée par les points 14 et 15. Elle n'est pas nécessairement parfaitement circulaire et peut être caractérisée par une dimension S. Le canal 8 est également déformé et le diamètre T est modifié. On constate donc que les surfaces des sections 31 et 32 dépendent de la pression exercée par les pièces 3 et 4 sur les surfaces de contact 6 et 7 du corps de valve 2, et ne sont plus égales. Généralement la surface 31 augmente plus que la surface de la section 32.

La valve 1 de la figure 1 présente donc l'inconvénient que le clapet 16 n'est pas toujours équilibré ; au contraire, les forces exercées sur le clapet 16 varient en fonction des conditions d'utilisation du corps de valve 2 et, plus particulièrement, de la pression exercée par les pièces 3 et 4 sur le corps de valve 2.

L'objet de la présente invention est de fournir une solution qui résout ces inconvénients.

### RESUME DE L'INVENTION

Un des buts de l'invention est de fournir une valve dans laquelle les dimensions du siège de clapet ne varient pas ou peu en fonction des conditions d'utilisation. La présente invention propose une valve selon la revendication 1. La valve comprend un clapet et un corps de valve, ledit corps de valve présentant une surface de contact destinée à entrer en contact avec un organe de contact adjacent, un canal présentant une portion d'extrémité débouchant à l'extérieur du corps de valve au niveau d'au moins un orifice d'extrémité, un siège de clapet entourant une section de passage de ladite portion d'extrémité du canal et une surface intermédiaire s'étendant entre ladite surface de contact et ledit orifice d'extrémité, ledit clapet étant apte à coopérer avec ledit siège de clapet pour empêcher un écoulement à travers ledit orifice d'extrémité, ledit corps de valve présente une rainure ménagée au niveau de ladite surface intermédiaire, ladite rainure entourant ledit siège de, ledit clapet est apte à coopérer avec ledit siège de clapet par contact un niveau d'une zone de contact dudit siège de clapet, ladite rainure s'étendant en profondeur parallèlement à la direction longitudinale de ladite portion d'extrémité du canal au moins sensiblement jusqu'à la profondeur de ladite zone de contact, caractérisée en ce que ladite rainure présente au moins une première portion s'étendant jusqu'à une première profondeur de rainure et une deuxième portion s'étendant jusqu'à une deuxième profondeur de rainure.

Grâce à ces caractéristiques, les dimensions du siège de clapet sont sensiblement stables, en fonction des conditions d'utilisation. Lorsque l'organe de contact exerce une pression sur la surface de contact du corps de valve, un champ de contrainte est créé dans le corps de valve. Toutefois, la rainure qui entoure le siège de clapet isole dans une certaine mesure le siège de clapet du reste du corps de valve, de sorte que le champ de contrainte au niveau du siège de clapet et le champ de déformation correspondant sont d'amplitude limitée.

Selon un mode de réalisation particulier, ledit clapet comprend une tête apte à coopérer avec ledit siège de clapet et une tige qui s'étend dans ledit canal, ladite tige présentant, à partir de ladite tête, une portion de section réduite qui défini une chambre intérieure dans ledit canal, un conduit qui débouche dans ladite chambre intérieure étant ménagé dans ledit corps de valve.

Dans ce mode de réalisation, la rainure permet d'empêcher ou de limiter une variation des sections qui limitent la chambre intérieure. Ainsi, dans le cas d'un clapet équilibré, l'équilibrage du clapet n'est pas ou peu modifié par les conditions d'utilisation.

De préférence, la portion d'extrémité du canal est sensiblement rectiligne et présente une orientation longitudinale qui coupe ladite surface intermédiaire au niveau dudit orifice d'extrémité.

Avantageusement, ladite rainure, vue parallèlement à ladite orientation longitudinale, est circulaire.

Dans un mode de réalisation particulier, ladite portion d'extrémité du canal présente une section transversale circulaire, ladite rainure étant concentrique avec ladite portion d'extrémité du canal.

De préférence, ladite rainure présente une paroi centrale cylindrique circulaire de directrice parallèle à ladite orientation longitudinale, une paroi de fond s'étendant de manière radiale à partir de ladite paroi centrale cylindrique et une paroi extérieure tronconique formant un angle non nul par rapport à ladite orientation longitudinale, qui s'étend de la paroi de fond à ladite surface intermédiaire.

De préférence, la jonction entre ladite paroi centrale cylindrique et ladite paroi de fond est, vue en coupe, un arc de cercle de rayon de courbure donné.

Le clapet est apte à coopérer avec ledit siège de clapet par contact un niveau d'une zone de contact dudit siège de clapet, ladite rainure s'étendant en profondeur parallèlement à la direction longitudinale de ladite portion d'extrémité du canal au moins sensiblement jusqu'à la profondeur de ladite zone de contact.

De préférence, ladite rainure s'étendant en profondeur parallèlement à la direction longitudinale de ladite portion d'extrémité du canal au moins jusqu'au double de la profondeur de ladite zone de contact.

La rainure présente au moins une première portion s' étendant jusqu' à une première profondeur de rainure et une deuxième portion s'étendant jusqu'à une deuxième profondeur de rainure.

De préférence, la rainure présente au moins une portion s'étendant jusqu'à une profondeur de rainure sensiblement supérieure à ladite profondeur de siège et s'étendant le long dudit canal. Par exemple, la profondeur de la rainure correspond à la fin de la portion de section réduite de la tige du clapet.

Grâce à ces caractéristiques, la portion de rainure s'étendant jusqu'à une profondeur sensiblement supérieure à la profondeur de siège, isole dans une certaine mesure le canal, de sorte que le champ de contrainte et le champ de déformation correspondant le long du canal sont d'amplitude limitée, réduisant ainsi les déformations du canal.

### BREVE DESCRIPTION DES DESSINS

D'autres caractéristiques, buts et avantages de l'invention apparaîtront à la lecture de la description détaillée qui va suivre, et en regard des dessins annexés, donnés à titre d'exemple non limitatif et sur lesquels:
- la figure 1 est une vue en coupe d'une valve selon l'art antérieur,
- la figure 2 représente un détail de la figure 1,
- la figure 3 est une vue en coupe d'une valve selon un premier mode de réalisation de l'invention,
- la figure 4 représente un détail de la figure 3,
- la figure 5 est une vue en coupe d'une valve selon un deuxième mode de réalisation de l'invention,
- la figure 6 est une vue en coupe d'une valve selon un troisième mode de réalisation de l'invention,
- la figure 7 est une vue en coupe d'une valve selon un quatrième mode de réalisation de l'invention,
- la figure 8 est une vue en coupe d'une valve selon une variante du mode de réalisation de la figure 3.

L'invention est maintenant décrite en référence aux figures et dans un but de clarté et de concision de la description une orientation de haut en bas selon le sens de la figure 1 sera utilisé sans aucune intention limitative quant à l'étendue de la protection, notamment au regard des différentes installations d'un injecteur dans un véhicule. Des mots tels que « haut, bas, en dessous, en dessus, vertical, monter, descendre ... » seront utilisés sans intention limitative.

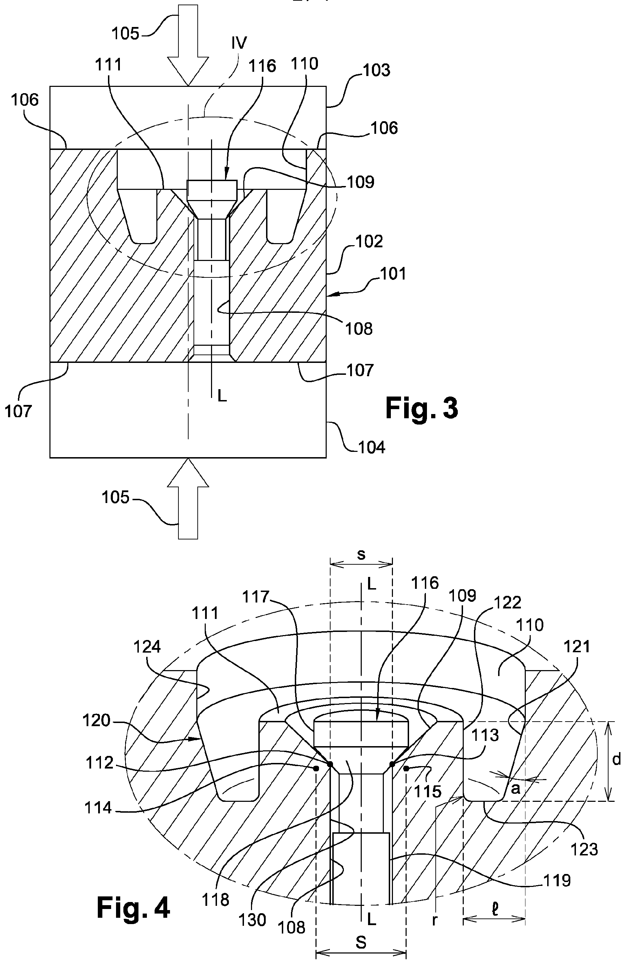

Les figures 3 et 4 représentent une valve selon un premier mode de réalisation de l'invention. Les éléments identiques ou similaires à des éléments de la valve de la figure 1 sont désignés par les mêmes références numériques augmentées de 100 et ne seront plus décrits en détail. Une rainure circulaire 120 est ménagée dans le corps de valve 102 de la valve 101 au niveau de la surface intermédiaire 111.

Plus précisément, la rainure 120 est définie par une paroi cylindrique circulaire 122 de directrice parallèle à l'axe L, par une paroi de fond 123, perpendiculaire à la paroi 122, et parallèle à la surface intermédiaire 111 et par une paroi tronconique 121, qui s'étend de la paroi 123 au bord inférieur de la paroi 124 qui délimite l'évidement 110. La paroi 123 est située à une profondeur d mesurée parallèlement à l'axe L par rapport à la surface intermédiaire 111. La paroi tronconique 121 forme un angle a par rapport à la direction de l'axe L.

Dans un autre mode de réalisation non représenté, la paroi 122 est une paroi tronconique formant un angle non nulle par rapport à la direction de l'axe L.

La jonction entre la paroi 122 et la paroi 123, vue en coupe, est un arc de cercle de rayon de courbure r. De même, les jonctions entre la paroi 123 et la paroi 121, et entre les parois 121 et 124 sont, vue en coupe, des arcs de cercle de rayon de courbure donnés.

Comme on peut le voir sur la figure 4, la profondeur d est environ égale au double de la distance entre la surface intermédiaire et la ligne de contact entre la portion tronconique 118 et le siège de clapet 109 représentée par les points 112 et 113 sur la figure 4 et mesurée parallèlement à l'axe L. Toutefois, une profondeur inférieure peut suffire. Par exemple, on considère qu'une profondeur d'au moins sensiblement égale à la distance précitée est suffisante. La paroi 122 est distante de la paroi 124 d'une distance **ℓ.**

Lorsque la première pièce 103 et la deuxième pièce 104 exercent une pression sur les surfaces de contact 106 et 107, un champ de contrainte est créé dans le corps de valve 102. La rainure 120 isole le siège de clapet 109 des surfaces 106 et 107, de sorte que le champ de contrainte au niveau du siège de clapet 109 est d'amplitude limitée. La ligne de contact entre la portion tronconique de la tête de clapet 117 et le siège de clapet 109 est représentée par les points 112 et 113. Lorsqu'une pression est exercée sur le corps de valve 102 par les première et deuxième pièces 103 et 104, le siège de clapet est légèrement déformé, de sorte que la ligne de contact est représentée par les points 114 et 115 sur la figure 4. Toutefois, la déformation du siège de clapet étant limitée, les points 114 et 115 sont très proches respectivement des points 112 et 113. Le diamètre s est très proche du diamètre S et l'équilibrage du clapet 116 n'est pas sensiblement modifié.

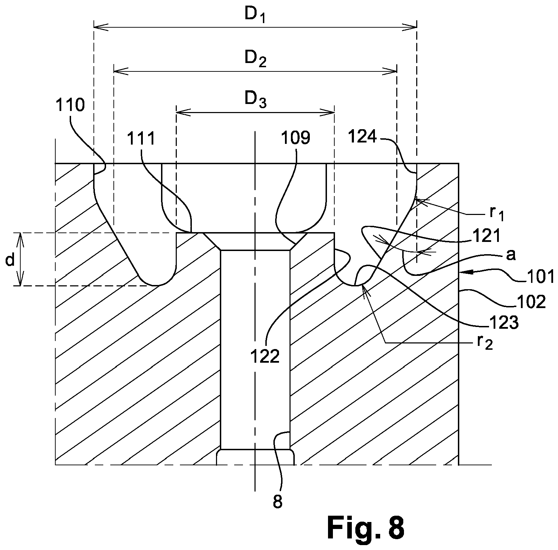

La figure 8 représente une valve selon une variante du mode de réalisation de la figure 3. Les mêmes références sont utilisées. Seules les différences entre la variante de la figure 8 et celle de la figure 3 sont décrite ci-après. La jonction entre les parois 121 et 124 est située au-dessus du plan de la surface intermédiaire 111. Elle présente un rayon de courbure r1. La paroi 121 et la paroi 122 sont reliées par une surface courbe 123 qui présente un rayon de courbure r2.

A titre d'exemple, on a déterminé que pour la valve de la figure 8, pour laquelle :
le rayon r1 = 1 mm,
le rayon r2 = 0.5 mm,
la profondeur de la rainure d = 2 mm,
l'angle a = 30°,
l'évidement 110 présente un diamètre D1 = 9,1 mm,
à hauteur de la surface 111, la paroi 121 présente un diamètre D2 = 8,1 mm,
la paroi 122 présente un diamètre D3 = 4,575 mm,
une charge axiale appliquée (cf. flèches 105 sur la figure 3) de 30000N,
le diamètre S est supérieur de 1 µm au diamètre s (cf. figure 4).

A titre de comparaison, pour une valve selon la figure 1, pour laquelle l'évidement 10 présente un même diamètre D 1 = 9,1 mm et une profondeur de 2 mm, et pour une charge axiale appliquée de 30000N, le diamètre S est supérieur de 3 µm au diamètre s (cf. figure 2).

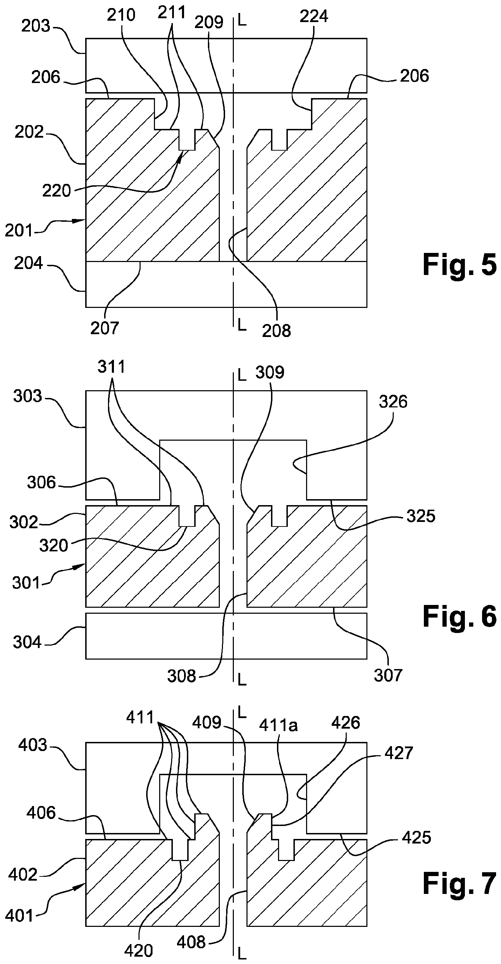

La figure 5 représente un corps de valve 201 selon un deuxième mode de réalisation de l'invention. Les éléments identiques ou similaires au corps de valve 101 de la figure 3 portent les mêmes références numériques augmentées de 100 et ne seront plus décrits en détail. Le clapet n'est pas représenté sur la figure 5. Toutefois, bien entendu, la valve 201 comprend un clapet similaire au clapet 116 de la figure 3. La valve 201 se différencie de la valve 101 en ce que la rainure 220 n'est pas creusée dans le prolongement de la paroi 224 de l'évidement 210. Au contraire, la rainure 220 est creusée au niveau d'un anneau circulaire de position intermédiaire entre le siège de clapet et la paroi 224. Autrement dit, des portions de la surface intermédiaire 211 se trouvent de part et d'autre de la rainure 220.

La figure 6 représente une valve 301 selon un troisième mode de réalisation de l'invention. Les éléments identiques ou similaires à des éléments du deuxième mode de réalisation sont désignés par les mêmes références numériques augmentées de 100 et ne seront plus décrits en détail. La valve 301 est destinée à coopérer avec une première pièce 303 qui présente un évidement central 326. La pièce 303 est en contact avec la surface de contact 306 du corps de valve 302 par un rebord de contact 325. Le corps 302 ne comprend pas d'évidement similaire à l'évidement 210. Au contraire, la surface intermédiaire 311 est située dans le même plan que la surface de contact 306. La limite entre la surface intermédiaire 311 et la surface de contact 306 est définie par la position de l'évidement 326.

La figure 7 représente une valve 401 selon un quatrième mode de réalisation de l'invention. Les éléments identiques ou similaires à des éléments de la figure 6 sont désignés par les mêmes références augmentées de 100 et ne seront plus décrits en détail. Le corps de valve 402 comprend une portion 427 qui fait saillie dans la direction de l'axe L au-delà du plan défini par la surface de contact 406. La surface intermédiaire 411 qui s'étend du siège de clapet 409 à la surface de contact 406 comprend une portion 411a cylindrique circulaire de directrice parallèle à l'axe L.

Dans les modes de réalisation des figures 5, 6 et 7, les rainures respectivement 220, 320 et 420 isolent dans une certaine mesure le siège de clapet 209, 309, 409 par rapport aux surfaces de contact respectivement 206, 306 et 406 de sorte que, quand la première pièce 203, 303, 403 exerce une pression sur la surface de contact 206, 306, 406, le champ de déformation qui en résulte est d'amplitude limitée au niveau du siège de clapet 209, 309, 409.

Un corps de valve selon l'invention pourrait présenter des différences par rapport aux différents modes de réalisation qui viennent d'être décrits.

Par exemple, le canal n'est pas nécessairement rectiligne. Dans ce cas, lorsqu'il est fait référence dans la description qui précède à l'axe longitudinal L du canal, il faut comprendre qu'il s'agit de l'axe longitudinal de la portion d'extrémité du canal.

Le siège de clapet n'est pas nécessairement situé au niveau de l'orifice d'extrémité du canal. Dans un mode de réalisation non représenté, la profondeur d de la rainure n'est pas sensiblement constante partout dans la rainure. Par exemple, la rainure peut présenter une première profondeur sensiblement égale à la profondeur d représentée sur la figure 4 sur un secteur circulaire d'environ 180° et une deuxième profondeur sensiblement supérieure à la première profondeur de la rainure sur un secteur circulaire d'environ 180°. Dans ce cas, la rainure 120 isole également le canal des surfaces de contact avec la première pièce de sorte que, lorsque la première pièce exerce une pression sur la surface de contact, le canal n'est sensiblement pas déformé, au moins jusqu'à la deuxième profondeur. La deuxième profondeur peut, par exemple, correspondre à la moitié de la longueur du canal ou correspondre à la longueur du canal. Dans ce cas, la rainure traverse le corps de valve au niveau de la portion de la deuxième profondeur.
Les valves décrites ci-dessus peuvent être utilisées dans un dispositif hydraulique et/ou pneumatique, par exemple dans un injecteur de carburant, tel que décrit dans le document EP 0 957 262, dans lequel la valve est agencée entre deux pièces en contact avec le corps de valve et susceptibles d'exercer une pression sur le corps de valve. Les valves telles que décrites au-dessus et utilisées dans les injecteur de carburant comme les injecteurs diesel utilisés dans les moteurs de véhicule. L'injecteur de carburant comprend un corps de buse dans lequel est agencée une aiguille mobile coulissante dans un alésage de corps de buse, l'aiguille étant agencée de manière étanche avec un siège de buse.

## Revendications

1. Valve (101, 201, 301, 401) comprenant un clapet (116) et un corps de valve (102, 202, 302, 402), ledit corps de valve présentant une surface de contact (106, 206, 306, 406) destinée à entrer en contact avec un organe de contact (103, 203, 303, 403) adjacent, un canal (108, 208, 308, 408) présentant une portion d'extrémité débouchant à l'extérieur du corps de valve au niveau d'au moins un orifice d'extrémité, un siège de clapet (109, 209, 309, 409) entourant une section de passage de ladite portion d'extrémité du canal et une surface intermédiaire (111, 211, 311, 411) s'étendant entre ladite surface de contact et ledit orifice d'extrémité, ledit clapet (116) étant apte à coopérer avec ledit siège de clapet (109, 209, 309, 409) pour empêcher un écoulement à travers ledit orifice d'extrémité, ledit corps de valve présente une rainure (120, 220, 320, 420) ménagée au niveau de ladite surface intermédiaire, ladite rainure entourant ledit siège de clapet,
ledit clapet est apte à coopérer avec ledit siège de clapet par contact un niveau d'une zone de contact dudit siège de clapet (112, 113, 114, 115), ladite rainure s'étendant en profondeur parallèlement à la direction longitudinale de ladite portion d'extrémité du canal au moins sensiblement jusqu' à la profondeur de ladite zone de contact
**caractérisée en ce que** ladite rainure présente au moins une première portion s'étendant jusqu'à une première profondeur de rainure et une deuxième portion s'étendant jusqu'à une deuxième profondeur de rainure.

2. Valve selon la revendication 1, **caractérisée par le fait que** ledit clapet comprend une tête (117) apte à coopérer avec ledit siège de clapet et une tige (119) qui s'étend dans ledit canal, ladite tige présentant, à partir de ladite tête, une portion de section réduite qui définit une chambre intérieure (130) dans ledit canal, un conduit qui débouche dans ladite chambre intérieure étant ménagé dans ledit corps de valve.

3. Valve selon l'une des revendications 1 à 2, **caractérisé par le fait que** ladite portion d'extrémité du canal est sensiblement rectiligne et présente une orientation longitudinale (L) qui coupe ladite surface intermédiaire au niveau dudit orifice d'extrémité.

4. Valve selon la revendication 3, **caractérisée par le fait que** ladite rainure, vue parallèlement à ladite orientation longitudinale, est circulaire.

5. Valve selon la revendication 4, **caractérisée par le fait que** ladite portion d'extrémité du canal présente une section transversale circulaire, ladite rainure étant concentrique avec ladite portion d'extrémité du canal.

6. Valve selon la revendication 4 ou 5, **caractérisée par le fait que** ladite rainure présente une paroi centrale cylindrique circulaire (122) de directrice parallèle à ladite orientation longitudinale (L), une paroi de fond (123) s'étendant de manière radiale à partir de ladite paroi centrale cylindrique et une paroi extérieure tronconique (121) formant un angle non nul (a) par rapport à ladite orientation longitudinale, qui s'étend de la paroi de fond à ladite surface intermédiaire.

7. Valve selon la revendication 1, **caractérisée par le fait que** ladite rainure (220) s'étendant en profondeur parallèlement à la direction longitudinale de ladite portion d'extrémité du canal au moins jusqu'au double de la profondeur de ladite zone de contact.

8. Valve selon la revendication 7, **caractérisée par le fait que** ladite rainure présente au moins une portion s'étendant jusqu'à une profondeur de rainure sensiblement supérieure à ladite profondeur de siège et s'étendant le long dudit canal.

## Patentansprüche

1. Ventil (101, 201, 301, 401), das eine Klappe (116) und einen Ventilkörper (102, 202, 302, 402) umfasst, wobei der Ventilkörper eine Kontaktfläche (106, 206, 306, 406), die dazu bestimmt ist, mit einem angrenzenden Kontaktelement (103, 203, 303, 403) in Kontakt zu kommen, einen Kanal (108, 208, 308, 408) mit einem Endabschnitt, der außerhalb des Ventilkörpers im Bereich mindestens einer Endöffnung mündet, einen Klappensitz (109, 209, 309, 409), der einen Durchgangsbereich des Endabschnitts des Kanals umgibt, und eine Zwischenfläche (111, 211, 311, 411) aufweist, die sich zwischen der Kontaktfläche und der genannten Endöffnung erstreckt, wobei die Klappe (116) geeignet ist, mit dem Klappensitz (109, 209, 309, 409) zusammenzuwirken, um ein Abfließen durch die Endöffnung zu verhindern, wobei der Ventilkörper eine Rille (120, 220, 320, 420) aufweist, die im Bereich der genannten Zwischenfläche vorgesehen ist, welche Rille den Klappensitz umschließt, und die Klappe geeignet ist, mit dem Klappensitz durch Kontakt im Bereich einer Kontaktzone des Klappensitzes (112, 113, 114, 115) zusammenzuwirken, wobei sich die Rille in der Tiefe parallel zur Längsrichtung des Endabschnitts des Kanals mindestens im Wesentlichen bis zur Tiefe der Kontaktzone erstreckt, **dadurch gekennzeichnet, dass** die Rille mindestens einen ersten Abschnitt umfasst, der sich bis zu einer ersten Rillentiefe erstreckt, sowie einen zweiten Abschnitt, der sich bis zu einer zweiten Rillentiefe erstreckt.

2. Ventil nach Anspruch 1, **dadurch gekennzeichnet, dass** die Klappe einen Kopf (117) aufweist, der geeignet ist, mit dem Klappensitz und einem Schaft (119) zusammenzuwirken, der sich in dem Kanal erstreckt, welcher Schaft von dem genannten Kopf aus einen Abschnitt mit verringertem Querschnitt aufweist, der eine Innenkammer (130) in dem Kanal definiert, wobei eine Leitung, die in der Innenkammer mündet, in dem Ventilkörper vorgesehen ist.

3. Ventil nach einem der Ansprüche 1 bis 2, **dadurch gekennzeichnet, dass** der Endabschnitt des Kanals im Wesentlichen geradlinig ist und eine Längsausrichtung (L) aufweist, welche die Zwischenfläche im Bereich der Endöffnung schneidet.

4. Ventil nach Anspruch 3, **dadurch gekennzeichnet, dass** die Rille, gesehen parallel zur genannten Längsausrichtung, kreisförmig ist.

5. Ventil nach Anspruch 4, **dadurch gekennzeichnet, dass** der Endabschnitt des Kanals einen ringförmigen Querschnitt aufweist, wobei die Rille mit dem Endabschnitt des Kanals konzentrisch ist.

6. Ventil nach Anspruch 4 oder 5, **dadurch gekennzeichnet, dass** die Rille eine zylindrische, umlaufende Mittelwand (122) mit einer Direktrix parallel zur Längsausrichtung (L) aufweist, wobei eine Bodenwand (123) sich radial von der zylindrischen Mittelwand aus erstreckt und eine kegelstumpfförmige Außenwand (121) einen Winkel (a) mit einem Wert ungleich Null bezogen auf die Längsausrichtung bildet, die sich von der Bodenwand zur Zwischenfläche erstreckt.

7. Ventil nach Anspruch 1, **dadurch gekennzeichnet, dass** die Rille (220) sich in der Tiefe parallel zur Längsrichtung des Endabschnitts des Kanals mindestens bis zur doppelten Tiefe der Kontaktzone erstreckt.

8. Ventil nach Anspruch 7, **dadurch gekennzeichnet, dass** die Rille mindestens einen Bereich aufweist, der sich bis zu einer Rillentiefe erstreckt, die im Wesentlichen größer ist als die Sitztiefe und sich entlang des genannten Kanals erstreckt.

## Claims

1. A valve (101, 201, 301, 401) comprising a flap (116) and a valve body (102, 202, 302, 402), said valve body having a contact surface (106, 206, 306, 406) intended to come into contact with an adjacent contact member (103, 203, 303, 403), a channel (108, 208, 308, 408) having an end portion emerging outside the valve body at at least one end orifice, a flap seat (109, 209, 309, 409) surrounding a passage section of said end portion of the channel and an intermediate surface (111, 211, 311, 411) extending between said contact surface and said end orifice, said flap (116) being able to cooperate with said flap seat (109, 209, 309, 409) to prevent flow through said end orifice,
said valve body has a groove (120, 220, 320, 420) provided at said intermediate surface, said groove surrounding said flap seat,
said flap is able to cooperate with said flap seat by contacting at a contact area of said flap seat (112, 113, 114, 115), said groove extending in depth parallel to the longitudinal direction of said end portion of the channel at least substantially up to the depth of said contact area,
**characterized in that** said groove has at least a first portion extending to a first groove depth and a second portion extending to a second groove depth.

2. The valve according to claim 1, **characterized in that** said flap comprises a head (117) able to cooperate with said flap seat and a rod (119) which extends in said channel, said rod having, from said head, a portion of reduced section which defines an inner chamber (130) in said channel, a conduit which emerges into said inner chamber being provided in said valve body.

3. The valve according to any of claims 1 to 2, **characterized in that** said end portion of the channel is substantially rectilinear and has a longitudinal orientation (L) which intersects said intermediate surface at said end orifice.

4. The valve according to claim 3, **characterized in that** said groove, seen parallel to said longitudinal orientation, is circular.

5. The valve according to claim 4, **characterized in that** said end portion of the channel has a circular cross section, said groove being concentric with said end portion of the channel.

6. The valve according to claim 4 or 5, **characterized in that** said groove has a circular cylindrical central wall (122) with a direction parallel to said longitudinal orientation (L), a bottom wall (123) extending radially from said cylindrical central wall and a frustoconical outer wall (121) forming a non-zero angle (a) with respect to said longitudinal orientation, which extends from the bottom wall to said intermediate surface.

7. The valve according to claim 1, **characterized in that** said groove (220) extends in depth parallel to the longitudinal direction of said end portion of the channel at least up to twice the depth of said contact area.

8. The valve according to claim 7, **characterized in that** said groove has at least one portion extending to a groove depth substantially greater than said seat depth and extending along said channel.
